# EUROPEAN PATENT SPECIFICATION

(11) **EP 2 543 974 B1**
(45) Date of publication and mention of the grant of the patent: **26.02.2014**
(21) Application number: 11172787.1
(22) Date of filing: 06.07.2011
(51) Int. Cl.: G01D 4/00, G01R 11/24

(54) **Metering system having improved security**
Messsystem mit verbesserter Sicherheit
Système de mesure doté d'une sécurité améliorée

(43) Date of publication of application: 09.01.2013
(73) Proprietor: NXP B.V., 5656 AG Eindhoven (NL)
(72) Inventor: Niessen, Patrick, 5656 AG Eindhoven (NL); Brands, Jan R., 5656 AG Eindhoven (NL)
(74) Representative: Krott, Michel

(56) References cited:
- DE-U1-202008 014 766
- US-A1- 2005 033 701
- US-A1- 2011 047 370

## Description

### FIELD OF THE INVENTION

The invention relates to a metering system comprising a metrology unit configured for obtaining digital metrology data representing a measured physical quantity such as representing use of a utility and a controller configured for transmitting protected usage information based on the digital metrology data to an external server.

The invention further relates to a metering method comprising obtaining digital metrology data representing a measured physical quantity representing use of a utility by a metrology unit, transmitting protected usage information based on the digital metrology data to an external server by a controller.

### BACKGROUND OF THE INVENTION

A smart metering system measures the consumption of a utility, such as electricity, water, heat and gas and is configured for remote readout. For example, a smart metering system may comprise an electrical meter and record consumption of electric energy in certain intervals, say intervals of an hour or less and communicates that information to the utility for monitoring and billing purposes. A smart meter often enables two-way communication between the meter and a central system, so that the smart meter may receive commands.

One of the concerns relating to smart meters is the security of the metering data. A user may try to change metering data without having the proper authorization to do so, with the aim of appearing to consume less of the utility. The result may be under-billing of that individual.

A further concern is that unauthorized people, not living in the household associated with the smart meter, could try to gain remote access to the smart metering device so that they are able to read the metrology data. From metering information one may deduce various personal data, such as deducing if somebody is currently at home or not.

Various standards are available for smart meters. For example requirements for a smart meter are given in "Dutch Smart Meter Requirements", Netbeheer Nederland, April 22nd, 2011, Version: 4.0. That document gives requirements for remotely readable metering for electricity, slave E meters, gas, thermal energy (heat) and water for domestic consumers.

That envisioned meter would have an interface for auxiliary appliances, used for sending data to the metering system, and a port for communication to suppliers, grid companies and the like. The meter may also have a communication ports for communication with external devices (e.g. hand-held terminal) during installation and on-site maintenance of the metering installation.

There have been attempts to address the concerns mentioned above, for example by incorporating security features in a central controller of the meter. However, at present the results have not been entirely satisfactory.

US 2005/033701 A1 discloses that in a central system for receiving reports of utility usage from a number of remote meters, a provision is made for assuring that a received report has actually been transmitted from a meter that has been registered with the central system. During the registration process, the meter transmits its public cryptographic code to the central system. With each report of utility usage, the meter sends a version of a message encrypted with its private cryptographic key. The central system decrypts this message with the meter's public key. If it matches an unencrypted version of the message it is known that the meter sent the report. The unencrypted message may be generated by the central system and transmitted to the meter in a request for a report, or it may be generated by the meter and sent along with the encrypted version.

### SUMMARY OF THE INVENTION

It would be of advantage to have a metering system having improved security.

An improved metering system comprises a metrology unit configured for obtaining digital metrology data representing a measured physical quantity such as representing use of a utility, a controller configured for transmitting protected usage information based on the digital metrology data to an external server, and a secure element. The secure element is arranged between the metrology unit and the controller, the secure element being connected to the metrology unit for receiving from the metrology unit the digital metrology data, the secure element being connected to the controller for sending the protected usage information to the controller. The secure element comprises a local storage for storing data dependent upon the received digital metrology data. The stored data represents the received digital metrology data for at least a predetermined period of time.

It is a problem of existing metering systems that they are particularly vulnerable to remote attacks on their central controller. Once an attacker has established outside control over the controller the metrology data may be read and/or corrupted.

This problem is solved by a metering system according to claim 1 and by a metering method according to claim 14.

By arranging the secure element between the metrology unit and the controller, the metrology data is stored in local storage before the metrology data is sent to the controller. Tampering of the controller will not influence the recording of metrology data. The secure element is configured for storing the data dependent upon the received digital metrology data in the local storage independent from the controller.

In an embodiment the metrology unit comprises an analog to digital convertor (ADC) for converting analog metrology data representing a measured physical quantity representing use of a utility to the digital metrology data. The analog to digital convertor comprises an input for receiving analog metrology data representing a measured physical quantity representing use of a utility and an output for the digital metrology data. For example, the metrology unit receives an analog or digital signal from a gas meter, or a water meter or the like. The metrology unit may also do other processing on the data, such as filtering, integration, arithmetic combination, etc.

The metrology unit may also perform the measuring itself. For example, for natural gas or water the metrology unit may send an ultrasound wave through the medium and measure a reflection response time.

For example, the physical quantity representing use of a utility may be a number of liters of water that flowed through an intake water pipe of a household.

The protected usage information based on the digital metrology data is protected by a digital cryptographic element such as a message authentication code (MAC) or a digital signature.

The external server may belong to a supplier, a grid operator, a billing company or the like. The server is configured to collect protected usage information from the metering system, typically from multiple metering systems. The protected usage information may be used by the server for billing but also for technical purposes. For example, a current capacity of the utility may be increased or decreased in dependence upon the protected usage information accumulated from the multiple metering systems.

The external server may be configured for verifying the protected usage information by verifying the cryptographic element. If the cryptographic element does not verify, for example it does not match the content of the usage information, or it does not correspond to the key used by the secure element for creating the cryptographic element, the server will raise an alarm; based on the alarm appropriate measures, such as fraud investigation may be instigated.

The local storage may comprise a local memory for example a flash memory or a magnetic storage, such as a hard disk. The local storage is preferably non-volatile storage. The secure element may serve as the interface to the local storage. The metering system is arranged such that the controller does not have direct access to the local storage, but only through the secure element.

The local storage is preferably accessible through an interface which requires local physical access to the metering system. In this manner a fraud investigation may read out the local storage without risking attackers gaining remote access to the local storage.

There are various ways in which to reduce the amount of data to be stored in the local storage, compared to the amount of digital metrology data obtained from the metrology unit. For example, the local storage may be configured as a so-called circular buffer. In this way the most recently produced data is available reaching as far back as the local storage size allows. With a predetermined period of time of say 24 hours, a sample size of say 2 bytes, and a sample rate of say once every second, a 169 kB memory would suffice. Having a slightly larger memory, say 256 kB would allow somewhat more storage than produced during the predetermined period of time. The person skilled in the art can adjust the size of the local storage depending upon the number of utilities, the amount of data to be stored and the predetermined period of time.

The digital metrology data may be compressed before it is stored, for example by a lossless compression algorithm.

The predetermined period of time depends among others on the required level of security

Since the metrology data is stored by the secure element breaking into the controller or a communication subsystem of the controller will not influence the metrology function. In particular, a denial of service attack on the metering system, a buffer overflow in the controller software etc, does not influence metrology function. Furthermore, metrology data is secured before it enters the central controller by adding a protecting element. This makes it impossible for the controller to modify the data without detection by the server. Even in the extreme case, wherein an attacker removes the protected element or the data altogether, then this would still be detected through its absence.

This invention can be applied to all type of metering devices: gas, water, electricity, oil, steam, and heat metering devices, etc.

The data dependent upon the received digital metrology data may comprises the accumulated use over a period. The period may be from a first start-up of the metering system.

In an embodiment, the metering system comprises a first bus and a second bus different from the first bus, the metrology unit and the secure element being connected to first bus, the controller being connected to the second bus.

Since the controller uses a different inter-communication system then the secure element and the metrology unit, the controller has no access to the communication between the secure element and the metrology unit. This improves the separation between secure element and the controller. The secure element may provide an interface to the controller over a connection. The metering system may comprise a gateway to transfer information from the secure element to the controller.

In an embodiment, the secure element is arranged to derive usage information based on the digital metrology data, and to protect the usage information to obtain protected usage information by adding a cryptographic integrity protecting element to the usage information.

The usage information may be identical to the digital metrology data. The usage information may be a summary of the digital metrology data. For example, usage information may comprise the usage during a predetermined period of time, say an hour.

The secure element may comprise a key storage, for storing a cryptographic key. The cryptographic key may be symmetric key, in which case the cryptographic integrity protecting element may be MAC, for example an HMAC, say based on SHA-256. The cryptographic key may be an asymmetric key, say the private key of a public-private key pair; in which case the cryptographic integrity protecting element may be a digital signature, for example an RSA based signature.

The cryptographic integrity protecting element may be verified by the external server. In this way the controller cannot make undetected changes to the protected usage information. Preferably, the protected usage information is readable by the controller, so that it may display the usage information on a display screen. In an embodiment the secure element also encrypts the usage information; this improves privacy.

In an embodiment, the secure element is configured for performing an authentication protocol with the external server, the secure element being configured for sending the protected usage information to the controller conditionally on the authentication protocol being successful.

Before forwarding the protected usage information, the secure element may verify that the intended recipient is on-line. For example, a challenge response protocol may be done with the external server. For example, the secure element may comprise a certificate of the external server. The secure element sends a nonce to the external server, via the controller. The external sever signs the nonce using a private key corresponding to the certificate in the secure element. The secure element verifies the signature on the nonce using the stored certificate.

In an embodiment, the local storage further stores calibration parameters of the metrology unit. The metrology unit may be calibrated. The calibration parameters are sensitive since modification may lead to incorrect measurements. By storing the calibration parameters in a local storage to which the controller does not have access, it is avoided that an attack on the controller could lead to corrupted calibration parameters. In this embodiment, the metrology unit has access to the local storage or the secure element provides an interface for requesting the calibration parameters. The interface does not allow modification.

In an embodiment, the metering system comprises a data concentrator unit. The data concentrator unit is configured for deriving from the digital metrology data an accumulated use over a predetermined period of time.

The resolution of the digital metrology data may be higher than desired. By computing an accumulated use, less data needs to be communicated to the external server or less data needs to be stored locally.

The data concentrator unit may be comprised in the secure element and the protected usage information comprises the accumulated use. This has the advantage that the accumulated use may be protected by the secure element.

In an embodiment, the secure element is configured for performing an authentication protocol with the data concentrator unit, the secure element being configured for sending the stored metrology data to the data concentrator unit conditionally on the authentication protocol being successful. This is especially useful if the data concentrator unit is not comprised in the secure element. The secure element could be configured for storing the received digital metrology data itself for at least a predetermined period of time in the local storage, so that the data concentrator unit may obtain this data.

In a system were local data concentration is done; each individual metering device can have a secure element as described in the invention. Additionally the data concentrator unit can use another secure element to authenticate itself to the metering devices of which it aggregates metrology data.

In an embodiment, the secure element comprises a smart card, smart card IC, SIM etc. A smart card has increased tamper resistance and is especially suitable for use as a secure element.

In an embodiment, the protected usage information comprises the digital metrology data.

In an embodiment, the metering system comprises a display screen. The controller is configured for displaying on the display screen an accumulated use based on the protected usage information. For example, the protected usage information comprises the digital metrology data; the protected usage information is send by the controller to the external server, but the controller produces a summary, say an accumulated use, for display on the display screen.

In an embodiment, the controller is only connected with the metrology unit through the secure element.

In an embodiment, the metering system is implemented as a so-called system in package. For example, the system in package comprises a first integrated circuit and a second integrated circuit, the first integrated circuit comprising the metrology unit and the secure element, the second integrated circuit comprising the controller.

For example, the system in package comprises a first integrated circuit, a second integrated circuit, and a third integrated circuit, the first integrated circuit comprising the metrology unit, the third integrated circuit comprises the secure element, and the second integrated circuit comprising the controller.

In a particularly advantageous embodiment the metrology unit and the secure element are comprised in a system in package and the controller is comprised in a separate IC. The different integrated circuits in a system in package may be connected internally through wires.

An aspect of the invention concerns a metering method. The metering method comprises obtaining digital metrology data representing a measured physical quantity representing use of a utility by a metrology unit, transmitting protected usage information based on the digital metrology data to an external server by a controller, receiving from the metrology unit the digital metrology data by a secure element, sending protected usage information to the controller by the secure element, storing data in a local storage dependent upon the received digital metrology data by the secure element, the stored data representing the received digital metrology data for at least a predetermined period of time.

The metering system is an electronic device. The metering system may comprise a housing. The housing may comprise the metrology unit, the controller, and the secure element. Optionally, the housing may not comprise the metrology unit, which may be comprised elsewhere, say in a utility meter. The connection between a utility meter and the metering system may be wireless, e.g. using Wireless MBUS; the wireless connection is preferably secured.

A method according to the invention may be implemented on a computer as a computer implemented method, or in dedicated hardware, or in a combination of both. Executable code for a method according to the invention may be stored on a computer program product. Examples of computer program products include memory devices, optical storage devices, integrated circuits, servers, online software, etc. Preferably, the computer program product comprises non-transitory program code means stored on a computer readable medium for performing a method according to the invention when said program product is executed on a computer

In a preferred embodiment, the computer program comprises computer program code means adapted to perform all the steps of a method according to the invention when the computer program is run on a computer. Preferably, the computer program is embodied on a computer readable medium.

### BRIEF DESCRIPTION OF THE DRAWINGS

The invention is explained in further detail by way of example and with reference to the accompanying drawings, wherein:
Figure 1 is a block diagram illustrating a metering system wherein the secure element is not arranged between the metrology unit and the controller,
Figure 2a is a block diagram illustrating a metering system wherein the secure element is arranged between the metrology unit and the controller,
Figure 2b is a block diagram illustrating the secure element,
Figure 3 is a block diagram illustrating an architecture for a metering system,
Figure 4 is a block diagram illustrating a system in package,
Figure 5 is a flow chart illustrating a metering method.
Figure 6 is block diagram illustrating a further embodiment.

Throughout the Figures, similar or corresponding features are indicated by same reference numerals.

### List of Reference Numerals:

- 100: a metering system
- 110: a controller
- 120: a metrology unit
- 140: a secure element
- 150: a communication unit
- 200: a metering system
- 210: a utility
- 220: an external server
- 240: a secure element
- 242: a authentication unit
- 244: a data concentrator unit
- 246: a local storage
- 300: a metering architecture
- 310: a first bus
- 320: a second bus
- 330: a connection
- 400: a system in package
- 410: a first integrated circuit
- 420: a second integrated circuit
- 430: a connection
- 500: a metering method
- 510: obtaining digital metrology data representing a measured physical quantity representing use of a utility by a metrology unit
- 520: receiving from the metrology unit the digital metrology data by a secure element
- 530: storing data in a local storage dependent upon the received digital metrology data by the secure element, the stored data representing the received digital metrology data for at least a predetermined period of time.
- 540: sending protected usage information to the controller by the secure element
- 550: transmitting protected usage information based on the digital metrology data to an external server by a controller
- 610: an adder
- 620: an accumulator
- 630: an accumulated use register
- 640: an authentication register

### DETAILED EMBODIMENTS

While this invention is susceptible of embodiment in many different forms, there is shown in the drawings and will herein be described in detail one or more specific embodiments, with the understanding that the present disclosure is to be considered as exemplary of the principles of the invention and not intended to limit the invention to the specific embodiments shown and described.

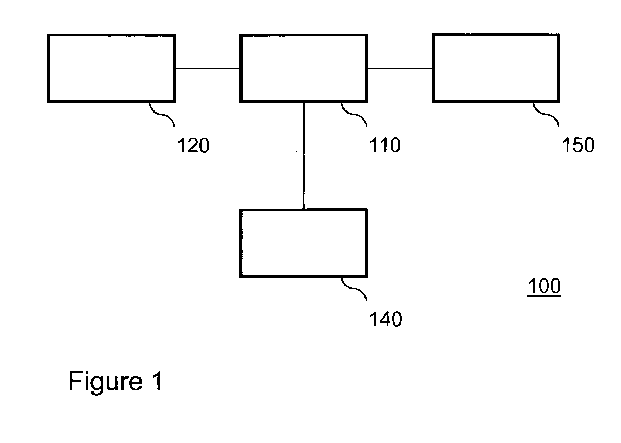

Figure 1 is a block diagram illustrating a metering system 100 wherein the secure element is not arranged between the metrology unit and the controller. Shown in figure 1 is a controller 110, a metrology unit 120, a secure element 140, and a communication unit 150.

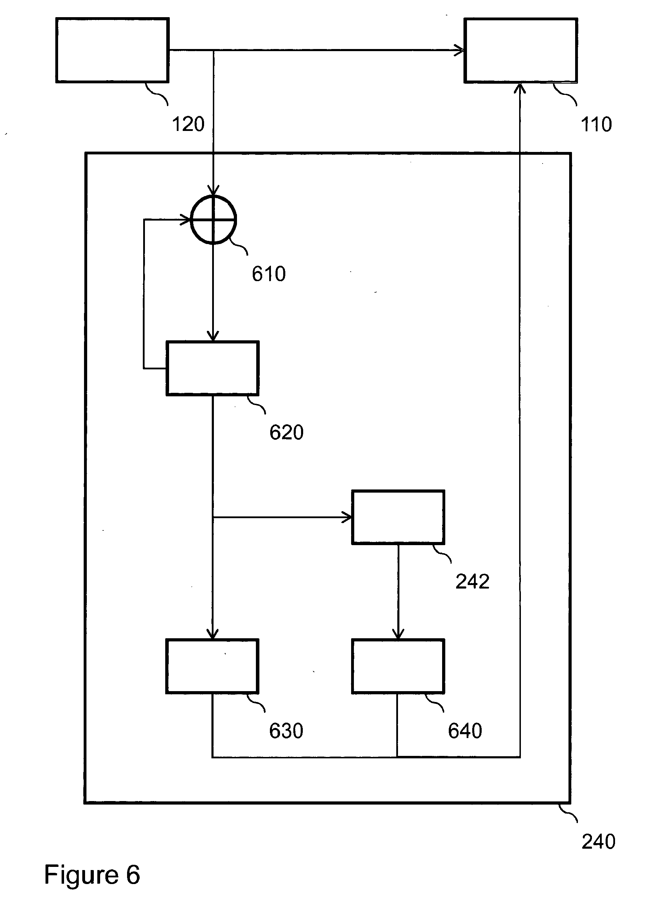

The controller receives digital metrology data directly from the metrology unit 120. Controller 110 may process the digital metrology data and send it to an external server (not shown) using communication unit 150. Before sending to communication unit 150, controller 110 may use a security co-processor 140 for cryptographic functions, say integrity protection or encryption. Metering system 100 has the disadvantage that if controller 110 is compromised, possibly remotely via communication unit 150, the metrology data may be read, thus violating privacy, or corrupted, violating the integrity of the system. Note that the external server may not be able to see that this happened since any integrity protection that controller 110 could add using secure element 140 may also be added by the attacker. Figure 6 illustrates an implementation of secure element 240 which may be used in this embodiment.

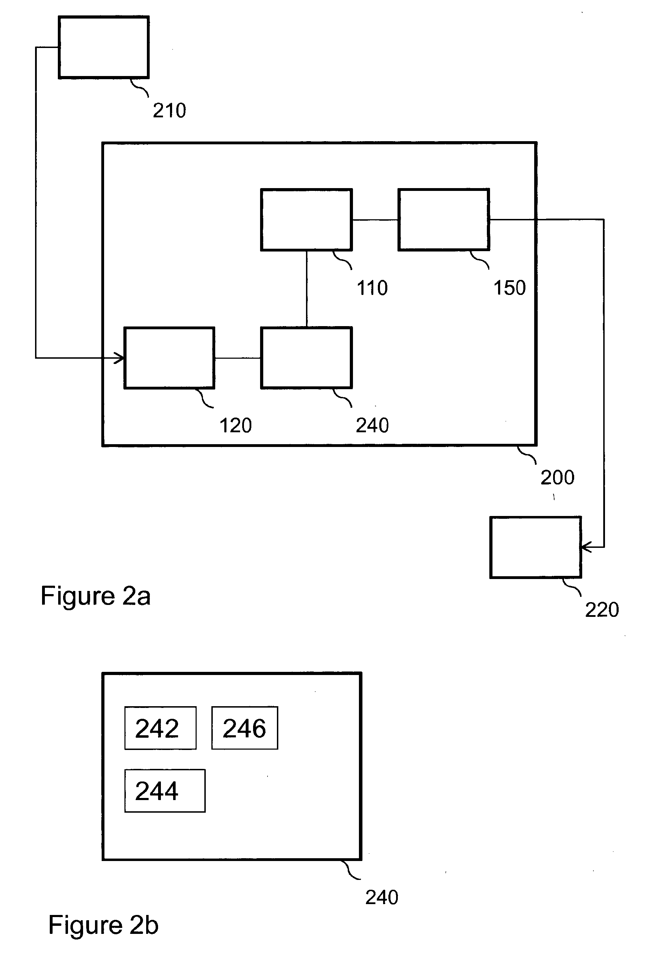

Figure 2a is a block diagram illustrating an improved metering system 200 wherein the secure element is arranged between the metrology unit and the controller. In Figure 2b further details of the secure element are illustrated. Figure 2a and 2b are together referred to as Figure 2.

Figure 2 shows a metering system 200, a utility 210 and an external server 220. Utility 210 as shown here maybe any device configured to give a signal, analog or digital, that represents use of a utility. External server 220 is an external server interested in receiving data representing the consumption. The signal may be formed by the usage itself, for example, in case of electricity this may comprise the closing of an electrical circuit.

Metering system 200 comprises a metrology unit 120. Metrology unit 120 comprises the functionality to measure the actual physical quantities that the metering device supports: This can be heat/cold flow, electricity consumption, gas flow, oil flow or water flow. This physical information (examples are joules, cubic meters, temperature, power, voltage, current, frequency) is referred to as metrology data. Optionally, metrology unit 120 could be remote from metering system 200, say comprised in utility 210. Having a remote meter, also called submetering, may be extended to multiple submeters.

Metering system 200 comprises a controller 110. Controller 110 takes care of the overall control of the meter. It will use the metrology data and reports this information to the outside world, in particular to external server 220.

Metering system 200 may comprise or be connected to a local display screen (not shown). The display screen may be an LCD screen. Controller 110 may use the local display for displaying end-user information. For example, controller 110 may be configured for displaying on the display screen an accumulated use over a time period.

Metering system 200 comprises a communication unit for communication between metering system 200 and external server 220. Communication unit 150 may comprise any one of multiple communication subsystems for long range remote communication; examples include: power line communication or GSM/GPRS cellular infrastructure. Controller 110 is connected to communication unit 150 so that protected usage information may be send to external server 220.

Metering system 200 may comprise local communication systems for communication with other type of metering devices 210, for example using wired or wireless short distance communications. Communication between utility 210 and metering system 200 has been indicated with a line, and may be wired or wireless.

In the shown embodiment, controller 110 is not directly connected to metrology unit 120. Controller 110 cannot get direct access to the digital metrology data.

Metering system 200 comprises a security element 240. The following components of secure element 240 are shown: an authentication unit 242, an optional data concentrator unit 244 and a local storage 246. For example, the secure element may comprise a smart card, smart card IC, SIM or the like.

Secure element 240 is connected to metrology unit 120 for receiving digital metrology data. Secure element 240 is connected to controller 110 for sending the protected usage information to controller 110.

Secure element 240 comprises a local storage 246 for storing data dependent upon the received digital metrology data. The stored data represents the received digital metrology data. Secure element 240 is configured to keep the stored data for at least a predetermined period of time. In an embodiment the predetermined period of time is any one of an hour, a day, a week, a month, a year. The stored data may be the digital metrology data itself. Shorter or longer periods are possible.

Secure element 240 may be configured to derive usage information based on the digital metrology data. Also the usage information may comprise the digital metrology data itself.

Secure element 240 comprises an authentication unit 242 configured to protect the usage information to obtain protected usage information by adding a cryptographic integrity protecting element to the usage information.

Secure element 240 may comprise a data concentrator unit 244. Data concentrator unit 244 is configured for deriving from the digital metrology data an accumulated use over a predetermined period of time. For example, the total use of a particular utility, say water, in say, the last hour. Secure element 240 may include the accumulated use in the usage information.

Typically metering system 200 comprises a power supply (not shown in figure) to create the internal supply for all the subsystems in the metering device.

One way of using metering system 200 is as follows. During use, utility 210 produces a signal that represents use of a utility. Metrology unit 120 receives the signal and if needed converts if from analog to digital. Next, secure element 240 receives digital metrology data. Secure element 240 may store the digital metrology data on local storage 246. Secure element 240 computes a protection element, say a MAC or signature, over all or a portion of the digital metrology data, and forwards the digital metrology data as protected usage information to controller 110. Controller 110 may use the data to show usage information to the user. Although the data is integrity protected controller 110 may derive its own information from the protected usage information, since the protected usage information is usually not encrypted (although this is possible to improve confidentiality) However, controller 110 forwards the protected usage information containing the digital metrology data to the external server. The external server may verify the protecting element. If controller 110 is compromised, it can only alter the data in a detectable manner.

Secure element 240 may compress the data, by accumulating it over a period.

Metrology data is securely stored by the secure element that contains local storage. In this way any attack on the communication systems, or the controller does not tamper with the measurement information of the metrology information. Also the secure element provides the only path to gain access to metrology information. No direct access to the metrology from the controller is possible.

The secure element may use authentication to ensure that any remote party that requests the metrology data via communication unit 150 is authorized to access the metrology data.

The secure element can also act as a secure storage for the calibration parameters of the metrology unit in the system.

In an embodiment, controller 110 does have access to metrology unit 120 to obtain the digital metrology data directly. However, controller 110 also receives protected usage information. This is particularly useful when secure element 240 comprises a data concentrator unit. Controller 110 has access to full data so that it can inform the user based on it. However, it can send reduced information to external server 220, thus reducing bandwidth requirements. It is also possible for the controller to send information based on the metrology data along with the protected usage information. In this manner the protected usage information acts as authentication on the metrology data. The server may verify that the usage information is consistent with the other data received from the controller.

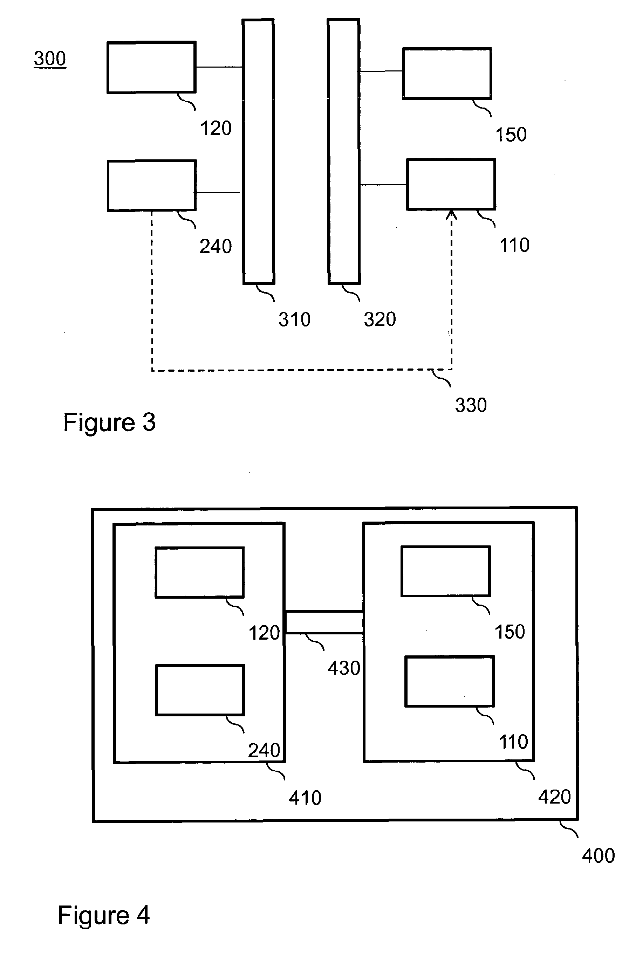

Figure 3 is a block diagram illustrating an architecture 300 for a metering system, such as metering system 200. Figure 3 shows a first bus 310 and a second bus 320. Metrology unit 120 and secure element 240 are connected to first bus 310 and can communicate via that medium. Communication unit 150 and controller 110 are connected to the second bus and can communicate via that medium. A connection 330 connects secure element 240 to controller 110 so that secure element 240 can send protected usage information to controller 110.

Figure 4 is a block diagram illustrating a system in package 400. Figure 4 shows a first integrated circuit 410 and a second integrated circuit 420. Metrology unit 120 and secure element 240 are integrated in first integrated circuit 410. Controller 110 and communication unit 150 are integrated in second integrated circuit 420. A connection 430 between first integrated circuit 410 and second integrated circuit 420 allows secure element 240 to send protected usage information to controller 110.

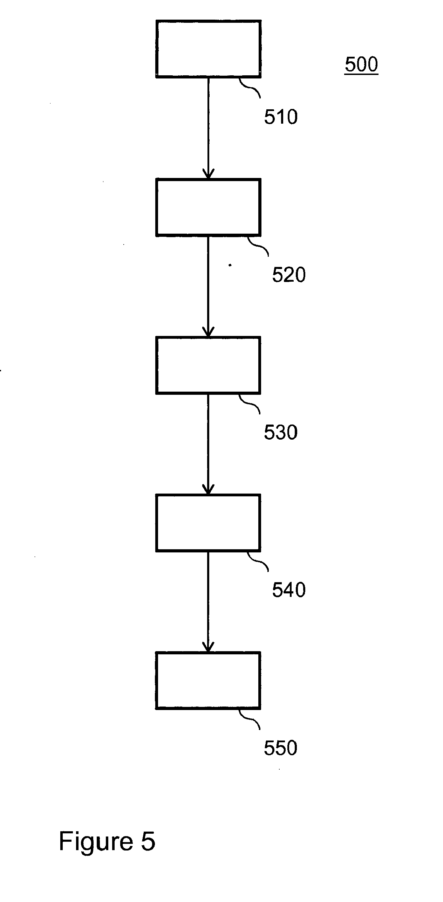

Figure 5 is a flow chart illustrating a metering method 500. The flow charts shows a step 510 comprising obtaining digital metrology data representing a measured physical quantity representing use of a utility by a metrology unit; a step 520 receiving from the metrology unit the digital metrology data by a secure element; a step 530 storing data in a local storage dependent upon the received digital metrology data by the secure element, the stored data representing the received digital metrology data for at least a predetermined period of time; a step 540 sending protected usage information to the controller by the secure element; and a step 550 transmitting protected usage information based on the digital metrology data to an external server by a controller.

Typically, the usage data forwarded by secure element 240 to controller 110 will be the same as the data stored. The data stored may well be the data received from metrology unit 120. However, this data may be different. Some processing may be done before storing on local storage 246 and some processing may be done after storing on local storage 246 but before sending to controller 110.

The flowchart shows one possible order in which to execute the steps. Many different ways of executing the method are possible, as will be apparent to a person skilled in the art. For example, the order of the steps can be varied or some steps may be executed in parallel. Moreover, in between steps other method steps may be inserted. The inserted steps may represent refinements of the method such as described herein, or may be unrelated to the method. Moreover, a given step may not have finished completely before a next step is started.

A method according to the invention may be executed using software, which comprises instructions for causing a processor system to perform method 500. Software may only include those steps taken by a particular sub-entity of the system. The software may be stored in a suitable storage medium, such as a hard disk, a floppy, a memory etc. The software may be sent as a signal along a wire, or wireless, or using a data network, e.g., the Internet. The software may be made available for download and/or for remote usage on a server.

Figure 6 shows a further implementation of the secure element 240. Controller 110 receives metrology data directly from metrology unit 120. Also secure element 240 receives the metrology data. The metrology data is added with a adder 610 to an accumulator 620. Accumulator 620 acts a secure local storage. Controller 110 cannot modify accumulator 620. At regular intervals the contents of accumulator 620 is copied to an accumulated use register 630. The same contents of accumulator 620 send to authentication unit 242. Authentication unit derives a protections element over the contents of accumulator 620 and places it in an authentication register 640. Controller 110 has read access to registers 630 and 640. The registers 630 and 640 together form protected usage information. When controller 110 send information to server 220 based on the metrology data it includes the content of registers 630 and 640. In this manner the server can verify the overall trend of the data, which may be sufficient to find fraud. This implementation if particular suitable for a smart card since it requires only little storage.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. Metering system (200) comprising
- a metrology unit (120) configured for obtaining digital metrology data representing a measured physical quantity (210) representing use of a utility,
- a controller (110) configured for transmitting protected usage information based on the digital metrology data to an external server (220), and
**characterized by** a secure element (240) for securely storing the digital metrology data, wherein
- the secure element is arranged between the metrology unit and the controller, the secure element being connected to the metrology unit for receiving from the metrology unit the digital metrology data, the secure element being connected to the controller for sending the protected usage information to the controller, and
- the secure element comprises a local storage (246) for securely storing data dependent upon the received digital metrology data, the stored data representing the received digital metrology data for at least a predetermined period of time.

2. Metering system as in Claim 1 comprising a first bus (310) and a second bus (320) different from the first bus, the metrology unit and the secure element being connected to first bus, the controller being connected to the second bus.

3. Metering system as in any one of the preceding claims, wherein the secure element is arranged to derive usage information based on the digital metrology data, and to protect the usage information to obtain protected usage information by adding a cryptographic integrity protecting element to the usage information.

4. Metering system as in any one of the preceding Claims, wherein the secure element is configured for performing an authentication protocol with the external server, the secure element being configured for sending the protected usage information to the controller conditionally on the authentication protocol being successful.

5. Metering system as in any one of the preceding Claims, wherein the local storage further stores calibration parameters of the metrology unit.

6. Metering system as in any one of the preceding Claims comprising a data concentrator unit (244), the data concentrator unit being configured for deriving from the digital metrology data an accumulated use over a predetermined period of time.

7. Metering system as in Claim 6 wherein the data concentrator unit is comprised in the secure element and the protected usage information comprises the accumulated use.

8. Metering system as in Claim 6 wherein
- the secure element is configured for storing the received digital metrology data for at least a predetermined period of time in the local storage, and
- the secure element is configured for performing an authentication protocol with the data concentrator unit, the secure element being configured for sending the stored metrology data to the data concentrator unit conditionally on the authentication protocol being successful.

9. Metering system as in any one of the preceding Claims wherein the secure element comprises a smart card.

10. Metering system as in any one of the preceding Claims, wherein the protected usage information comprises the digital metrology data.

11. Metering system as in Claim 10 comprising a display screen, wherein the controller is configured for displaying on the display screen an accumulated use based on the protected usage information.

12. Metering system as in any one of the preceding Claims wherein the controller is only connected with metrology unit through the secure element.

13. System in package comprising a metering system as in any one of the preceding claims, the system in package comprising a first integrated circuit and a second integrated circuit, the first integrated circuit comprising the metrology unit and the secure element, the second integrated circuit comprising the controller.

14. Metering method (500) comprising
- obtaining (510) digital metrology data representing a measured physical quantity (210) representing use of a utility by a metrology unit (120),
- transmitting (550) protected usage information based on the digital metrology data to an external server (220) by a controller (110),
and **characterized by**
- receiving (520) from the metrology unit the digital metrology data by a secure element (240),
- securely storing the digital metrology data by the secure element,
- sending (540) protected usage information to the controller by the secure element,
- securely storing data (530) in a local storage (246) comprised in the secure element dependent upon the received digital metrology data by the secure element, the stored data representing the received digital metrology data for at least a predetermined period of time.

## Patentansprüche

1. Ein Messsystem (200), aufweisend
eine Metrologie Einheit (120), welche konfiguriert ist zum Erhalten von digitalen Metrologie Daten, welche eine gemessene physikalische Größe (210) repräsentieren, welche ein Verwenden eines Hilfsmittels repräsentiert,
eine Steuerung (110), welche konfiguriert ist zum Senden von geschützter Gebrauchsinformation, basierend auf den digitalen Metrologie Daten, an einen externen Server (220), und
**gekennzeichnet durch** ein Sicherheitselement (240) zum sicheren Speichern der digitalen Metrologie Daten, wobei
das Sicherheitselement zwischen der Metrologie Einheit und der Steuerung angeordnet ist, wobei das Sicherheitselement mit der Metrologie Einheit verbunden ist zum Empfangen der digitalen Metrologie Daten von der Metrologie Einheit, wobei das Sicherheitselement mit der Steuerung verbunden ist zum Senden der geschützten Gebrauchsinformation an die Steuerung, und
das Sicherheitselement einen lokalen Speicher (246) aufweist zum sicheren Speichern von Daten, welche von den empfangenen digitalen Metrologie Daten abhängig sind, wobei die gespeicherten Daten die empfangenen digitalen Metrologie Daten für zumindest eine vorbestimmte Zeitspanne repräsentieren.

2. Messsystem gemäß Anspruch 1, aufweisend einen ersten Bus (310) und einen zweiten Bus (320), welcher von dem ersten Bus verschieden ist, wobei die Metrologie Einheit und das Sicherheitselement mit dem ersten Bus verbunden sind, wobei die Steuerung mit dem zweiten Bus verbunden ist.

3. Messsystem gemäß irgendeinem der vorangehenden Ansprüche, wobei das Sicherheitselement angeordnet ist, um Gebrauchsinformation, welche auf den digitalen Metrologie Daten basieren, abzuleiten und um die Gebrauchsinformation zu schützen, um Gebrauchsinformation zu erhalten mittels Hinzufügen eines kryptografischen Integritäts-Schutzelements zu der Gebrauchsinformation.

4. Messsystem gemäß irgendeinem der vorangehenden Ansprüche, wobei das Sicherheitselement konfiguriert ist, um ein Authentifizierungsprotokoll mit dem externen Server auszuführen, wobei das Sicherheitselement konfiguriert ist zum Senden der geschützten Gebrauchsinformation an die Steuerung, bedingt dadurch, dass ein Authentifizierungsprotokoll erfolgreich ist.

5. Messsystem gemäß irgendeinem der vorangehenden Ansprüche, wobei der lokale Speicher ferner Kalibrierungsparameter der Metrologie Einheit speichert.

6. Messsystem gemäß irgendeinem der vorangehenden Ansprüche, aufweisend eine Daten Konzentrationseinheit (244), wobei die Daten Konzentrationseinheit konfiguriert ist zum Ableiten eines akkumulierten Gebrauchs über eine vorbestimmte Zeitspanne von den digitalen Metrologie Daten.

7. Messsystem gemäß Anspruch 6, wobei die Daten Konzentrationseinheit in dem Sicherheitselement enthalten ist und die geschützte Gebrauchsinformation den akkumulierten Gebrauch aufweist.

8. Messsystem gemäß Anspruch 6, wobei
das Sicherheitselement konfiguriert ist zum Speichern der empfangenen digitalen Metrologie Daten für zumindest eine vorbestimmte Zeitspanne in dem lokalen Speicher, und
das Sicherheitselement konfiguriert ist zum Ausführen eines Authentifizierungsprotokolls mit der Daten Konzentrationseinheit, wobei das Sicherheitselement konfiguriert ist zum Senden der gespeicherten Metrologie Daten an die Daten Konzentrationseinheit, bedingt dadurch, dass ein Authentifizierungsprotokoll erfolgreich ist.

9. Messsystem gemäß irgendeinem der vorangehenden Ansprüche, wobei das Sicherheitselement eine Smartcard aufweist.

10. Messsystem gemäß irgendeinem der vorangehenden Ansprüche, wobei die geschützte Gebrauchsinformation die digitalen Metrologie Daten aufweist.

11. Messsystem gemäß Anspruch 10, aufweisend einen Anzeigeschirm, wobei die Steuerung konfiguriert ist zum Anzeigen eines akkumulierten Gebrauchs, welcher auf der geschützten Gebrauchsinformation basiert, auf dem Anzeigeschirm.

12. Messsystem gemäß irgendeinem der vorangehenden Ansprüche, wobei die Steuerung nur durch das Sicherheitselement mit der Steuerung verbunden ist.

13. System in einem Gehäuse, aufweisend ein Messsystem gemäß irgendeinem der vorangehenden Ansprüche, wobei das System in dem Gehäuse eine erste integrierte Schaltung und eine zweite integrierte Schaltung aufweist, wobei die erste integrierte Schaltung die Metrologie Einheit und das Sicherheitselement aufweist, wobei die zweite integrierte Schaltung die Steuerung aufweist.

14. Messverfahren (500), aufweisend
Erhalten (510) von digitalen Metrologie Daten, welche eine gemessene physikalische Größe (210) repräsentieren, welche den Gebrauch eines Hilfsmittels mittels einer Metrologie Einheit (120) repräsentiert,
Senden (550) von geschützter Gebrauchsinformation, welche auf den digitalen Metrologie Daten basiert, an einen externen Server (220) mittels einer Steuerung (110),
und **gekennzeichnet durch**
Empfangen (520) der digitalen Metrologie Daten von der Metrologie Einheit mittels eines Sicherheitselements (240),
sicheres Speichern der digitalen Metrologie Daten mittels des Sicherheitselements, Senden (540) von geschützter Gebrauchsinformation an die Steuerung mittels des Sicherheitselements,
sicheres Speichern von Daten (530) in einem lokalen Speicher (246), welcher in dem Sicherheitselement enthalten ist, abhängig von den mittels des Sicherheitselements empfangenen digitalen Metrologie Daten, wobei die gespeicherten Daten die empfangenen Metrologie Daten für zumindest eine vorbestimmte Zeitspanne repräsentieren.

## Revendications

1. Système compteur (200), comprenant
- une unité de métrologie (120) conçue pour obtenir des données de métrologie numériques représentant une quantité physique mesurée (210) représentant la consommation d'un service d'utilité publique,
- une unité de commande (110) conçue pour transmettre à un serveur externe (220) des informations de consommation protégées basées sur les données de métrologie numériques, et
**caractérisé par** un élément sécurisé (240) destiné à stocker de façon sécurisée les données de métrologie numériques,
- lequel élément sécurisé est agencé entre l'unité de métrologie et l'unité de commande, l'élément sécurisé étant relié à l'unité de métrologie pour recevoir de l'unité de métrologie les données de métrologie numériques, l'élément sécurisé étant relié à l'unité de commande pour envoyer les informations de consommation protégées à l'unité de commande, et
- lequel élément sécurisé comprend un stockage local (246) destiné à stocker de façon sécurisée des données qui sont fonction des données de métrologie numériques reçues, les données stockées représentant les données de métrologie numériques reçues pendant au moins une période de temps prédéfinie.

2. Système compteur selon la revendication 1, comprenant un premier bus (310) et un deuxième bus (320) différent du premier bus, l'unité de métrologie et l'élément sécurisé étant reliés au premier bus, l'unité de commande étant reliée au deuxième bus.

3. Système compteur selon l'une quelconque des revendications précédentes, dans lequel l'élément sécurisé sert à déduire des informations de consommation basées sur les données de métrologie numériques, et à protéger les informations de consommation pour obtenir des informations de consommation protégées en ajoutant un élément de protection d'intégrité cryptographique aux informations de consommation.

4. Système compteur selon l'une quelconque des revendications précédentes, dans lequel l'élément sécurisé est conçu pour exécuter un protocole d'authentification avec le serveur externe, l'élément sécurisé étant conçu pour envoyer les informations de consommation protégées à l'unité de commande uniquement en cas de succès du protocole d'authentification.

5. Système compteur selon l'une quelconque des revendications précédentes, dans lequel le stockage local stocke en outre des paramètres d'étalonnage de l'unité de métrologie.

6. Système compteur selon l'une quelconque des revendications précédentes, comprenant une unité de concentration de données (244), l'unité de concentration de données étant conçue pour déduire des données de métrologie numériques une utilisation cumulée sur une période de temps prédéfinie.

7. Système compteur selon la revendication 6, dans lequel l'unité de concentration de données est contenue dans l'élément sécurisé et les informations de consommation protégées comprennent l'utilisation cumulée.

8. Système compteur selon la revendication 6, dans lequel
- l'élément sécurisé est conçu pour stocker dans le stockage local les données de métrologie numériques reçues pendant au moins une période de temps prédéfinie, et
- l'élément sécurisé est conçu pour exécuter un protocole d'authentification avec l'unité de concentration de données, l'élément sécurisé étant conçu pour envoyer les données de métrologie stockées à l'unité de concentration de données uniquement en cas de succès du protocole d'authentification.

9. Système compteur selon l'une quelconque des revendications précédentes, dans lequel l'élément sécurisé comprend une carte intelligente.

10. Système compteur selon l'une quelconque des revendications précédentes, dans lequel les informations de consommation protégées comprennent les données de métrologie numériques.

11. Système compteur selon la revendication 10, comprenant un écran d'affichage, l'unité de commande étant conçue pour afficher sur l'écran d'affichage une utilisation cumulée basée sur les informations de consommation protégées.

12. Système compteur selon l'une quelconque des revendications précédentes, dans lequel l'unité de commande est uniquement reliée à l'unité de métrologie par le biais de l'élément sécurisé.

13. Système en boîtier, comprenant un système compteur selon l'une quelconque des revendications précédentes, le système en boîtier comprenant un premier circuit intégré et un deuxième circuit intégré, le premier circuit intégré comprenant l'unité de métrologie et l'élément sécurisé, le deuxième circuit intégré comprenant l'unité de commande.

14. Procédé de comptage (500), comprenant les étapes consistant à
- obtenir (510), par une unité de métrologie (120), des données de métrologie numériques représentant une quantité physique mesurée (210) représentant la consommation d'un service d'utilité publique,
- transmettre (550) à un serveur externe (220), par une unité de commande (110), des informations de consommation protégées basées sur les données de métrologie numériques, et
**caractérisé par** les étapes consistant à
- recevoir (520) de l'unité de métrologie, par un élément sécurisé (240), les données de métrologie numériques,
- stocker de façon sécurisée, par l'élément sécurisé, les données de métrologie numériques,
- envoyer (540), par l'élément sécurisé, des informations de consommation protégées à l'unité de commande,
- stocker de façon sécurisée (530), par l'élément sécurisé, dans un stockage local (246) contenu dans l'élément sécurisé, des données qui sont fonction des données de métrologie numériques reçues, les données stockées représentant les données de métrologie numériques reçues pendant au moins une période de temps prédéfinie.
